# EUROPÄISCHE PATENTSCHRIFT

(11) **EP 1 216 565 B1**
(45) Veröffentlichungstag und Bekanntmachung des Hinweises auf die Patenterteilung: **24.11.2004**
(21) Anmeldenummer: 01972011.9
(22) Anmeldetag: 06.09.2001
(51) Int. Cl.: H04L 29/06

(54) **ABRECHNUNGSVERFAHREN UNTER NUTZUNG VON SSL/TLS**
BILLING METHOD USING SSL/TLS
PROCEDE DE FACTURATION UTILISANT SSL/TLS

(30) Priorität: 29.09.2000 DE 10048731
(43) Veröffentlichungstag der Anmeldung: 26.06.2002
(73) Patentinhaber: Deutsche Telekom AG, 53113 Bonn (DE)
(72) Erfinder: MARTIN, Tobias, 35466 Rabenau (DE); SCHWENK, Jörg, 91239 Henfenfeld (DE)
(86) Internationale Anmeldenummer: PCT/EP2001/010262
(87) Internationale Veröffentlichungsnummer: WO 2002/028055

(56) Entgegenhaltungen:
- EP-A- 0 880 254
- FREIER A O ET AL: "THE SSL PROTOCOL VERSION 3.0" INTERNET DRAFT, 18. November 1996 (1996-11-18), Seiten ABSTRACTS,1-72, XP002923866
- T. DIERKS; C. ALLEN: "The TLS Protocol Version 1.0" RFC 2246, [Online] Januar 1999 (1999-01), XP002185054 Gefunden im Internet: <URL:www.ietf.org> [gefunden am 2001-12-07]
- BRANDS S: "ELECTRONIC CASH ON THE INTERNET" PROCEEDINGS OF THE SYMPOSIUM ON NETWORK AND DISTRIBUTED SYSTEM SECURITY, XX, XX, 1995, Seiten 64-84, XP000567597

## Beschreibung

Die vorliegende Erfindung betrifft ein Abrechnungsverfahren für das Anfordern von Inhalten oder Daten in einem Netzwerk , wobei der Client bzw. der den Client benutzende Kunde ein Zertifikat für das Abrechnungsverfahren hat, welches verifizierte Daten enthält, die den Kunden ausweisen und das Erstellen einer Rechnung bzw. die Abrechnung ermöglichen.

Die Spezifizierung eines Abrechnungsverfahrens für Inhalte des Internet stellt eine große Herausforderung dar. Es besteht insbesondere auch bei Telekommuikationsunternehmen ein sehr großer Bedarf. Es existiert z.B. die Lösung, bei der beim Aufruf einer kostenpflichtigen WWW-Seite die bestehende Modem- oder ISDN-Verbindung mit dem Internet Service Provider (z.B. T-Online) abgebaut und eine neue Verbindung über eine 0190-Rufnummer aufgebaut wird. Diese Lösung entspricht nicht Internet-Standards und birgt potentiell eine Fülle von Problemen in der Praxis.

Das am häufigsten eingesetzte Abrechnungsverfahren im Internet ist die Abrechnung über Kreditkarte. Die Kosten und Missbrauchsmöglichkeiten sind hier allerdings sehr hoch.

Zur Absicherung, d.h. sicheren Übertragung von Daten bei Client-Server-Verbindungen gibt es einen heute allgemein akzeptierten Standard, das Secure Socket Layer- (SSL-) Protokoll, auch als Transport Layer Security (TLS) bezeichnet. SSL wird heute in allen WWW-Browsern und WWW-Servern unterstützt. Von der IETF wurde die leicht veränderte Variante TLS (IETF RFC 2246) standardisiert.

SSL/TLS unterstützt verpflichtend die Authentisierung des Servers und optional die Authentisierung des Clients.

Der vorliegenden Erfindung liegt die Aufgabe zugrunde, eine sicheres Abrechnungsverfahren bereitzustellen, welches bereits in WWW-Browsern verfügbare Protokolle nutzt.

Diese Aufgabe wird erfinderisch mit einem Abrechnungsverfahren mit den Merkmalen des Anspruchs 1 gelöst. Weitere vorteilhafte Ausgestaltungen des Verfahrens gem. Anspruch 1 ergeben sich durch die Merkmale der Unteransprüche.

Der Vorteil dieser Erfindung gegenüber herkömmlichen Verfahren besteht darin, daß beim Kunden keine Client-Software installiert werden muß, da alle Standardbrowser SSL/TLS unterstützen. Der Kunde muß lediglich ein spezielles Zertifikat beantragen. In der Praxis kann jedoch auch eine spezielle SSL-Clientsoftware für den Kunden vorgesehen werden, die ihm den tatsächlichen Preis einer aufgerufenen Internet-Seite anzeigt. Auf Serverseite sind nur geringe Veränderungen vorzunehmen. Die Sicherheit des Verfahrens ist hoch, da SSL sich bereits seit vielen Jahren in der Praxis bewährt.

Es ist von Vorteil, daß das Secure Socket Layer- (SSL-) Protokoll oder eine Variante des SSL-Protokolls, die das Anzeigen einer Dialogbox gestattet, für die Client-Server-Verbindung verwendet wird. Es wird vorteilhaft ein SSL-Client-Zertifikat verwendet, in dem z.B. eine Extension gesetzt ist, die anzeigt, daß das Zertifikat für Abrechnungszwecke geeignet ist. Während des Handshake-Protokolls wird dann der Preis für den angeforderten Inhalt oder die Daten vom Server an den Client übertragen, und eine Bestätigungsnachricht, die ebenfalls im SSL-Protokoll eingebunden ist und eine digitale Signatur enthält, vom Client zum Server gesandt, wobei die Bestätigungsnachricht den zuvor übermittelten Preis bestätigt. Damit die Abrechnung später nachgewiesen werden kann, werden vorteilhaft die Bestätigungsnachrichten und/oder Logfiles vom Server protokolliert und die darin enthaltenen Daten für die Abrechnung verwendet.

Vorteilhaft wird nach dem Herunterladen des bezahlten Inhalts bzw. der bezahlten Daten die SSL-Verbindung abgebaut. Dabei kann der Abbau automatisch vom Server durchgeführt werden. Hierdurch wird gewährleistet, daß beim erneuten Anfordern von kostenpflichtigen Daten bzw. WWW-Inhalten erneut eine SSL-Verbindung aufgebaut wird.

Alternativ ist es möglich, daß vor Anwahl einer kostenpflichtigen Internetseite eine möglicherweise bestehende SSL-Verbindung durch den Server oder eine zwischengeschaltete Internetseite abgebaut wird, und anschließend eine erneute Client-Authentifikation zum Herunterladen der kostenpflichtigen Internetseite erfolgt.

Der Kunde bekommt i.d.R. den Preis für eine angewählte Internet-Seite auf der vorangehenden Seite angezeigt. Dabei muß er sich allerdings darauf verlassen, daß der Betreiber des Web-Servers den richtigen Preis anzeigt. Ein betrügerischer Web-Server-Betreiber könnte einen anderen Preis anzeigen, als in der entsprechenden Protokollnachricht enthalten ist. Die Clientsoftware des Benutzers würde in diesem Fall den ggf. höheren Preis ohne Wissen des Benutzers signieren. Um dem Kunden hier eine bessere Transparenz der Abrechnung zu geben und um Betrugsmöglichkeiten auszuschließen, ist es von Vorteil, wenn vor der Signierung der Bestätigungsnachricht eine Abfrage, insbesondere mittels einer Dialogbox, mit den Optionen "Weiter" und "Abbrechen", beim Client erfolgt, in der mittels manueller Bestätigung die angezeigten Kosten für die angewählte kostenpflichtige Internetseite bzw. der angewählten Daten bestätigt werden können, wobei bei Bestätigung der Kosten der kostenpflichtige Inhalt bzw. die Daten vom Server zum Client übertragen werden oder aber der Anfragevorgang abgebrochen wird. Hierdurch ist es dem Kunden möglich, einen versehentlich ausgewählten kostenpflichtigen Auftrag zu stoppen, ohne daß ihm Kosten entstehen.

Die entsprechende Abfrage kann dabei vorteilhaft über eine Fehlermeldung des Clients (z.B. Certificate Name Check) oder mittels eines Java-Applets oder einer Active-X-Anwendung, die insbesondere ihrerseits signiert sind, realisiert werden.

Alle Kostenangaben können auch mittels signierter XML-(eXtended Markup Language) Seiten dem Client übermittelt werden. Die Seiten können dabei mit der Preisangabe und/oder mit einer Zeitangabe signiert sein. Auch kann vorteilhaft in die Signatur zusätzlich ein Hashwert des Inhalts der kostenpflichtigen Seite eingehen.

Nachfolgend wird eine mögliche Ausgestaltung des erfindungsgemäßen Abrechnungsverfahren für das Internet detailliert beschrieben. Bei dieser Ausgestaltung beantragt der Kunde ein spezielles SSL-Client-Zertifikat. In diesem Zertifikat ist eine Extension gesetzt, die anzeigt, daß dieses Zertifikat für Abrechnungszwecke eingesetzt werden kann. Im Zertifikat sollten verifizierte Daten enthalten sein, die das Erstellen einer Rechnung ermöglichen, wie z.B. Kundennummer etc. Kostenpflichtige Seiten auf einem Server sind dabei nur über das https-Protokoll mit Client-Authentifikation einzusehen. Die Authentifikation des Client für diese URL wird protokolliert und in einem Logfile abgespeichert. In einer SSL-Nachricht, die während des Handshake-Protokolls vom Server zum Client gesendet wird, ist der Preis für die kostenpflichtige Seite enthalten (eine Art elektronischer Abrechnungsbeleg). Durch eine entsprechende Bestätigungsnachricht, die ebenfalls im SSL-Protokoll vorgesehen ist, erhält der Server eine Signatur (elektronische Unterschrift) dieses Abrechnungsbelegs. Dadurch wird auf Server-Seite nachweisbar dokumentiert, daß der Benutzer die kostenpflichtige Seite tatsächlich angefordert hat. Vor Anwahl einer weiteren kostenpflichtige Seite wird die SSL-Verbindung abgebaut (z.B. durch eine zwischengeschaltete http-Seite oder durch Abbruch der Verbindung seitens des Servers). Dadurch wird eine erneute Client-Authentifikation erforderlich, die wiederum protokolliert werden kann. Die im Logfile enthaltenen Abrechnungsdaten werden aufbereitet und zur Rechnungserstellung weitergeleitet. Das Logfile wird aufbewahrt, bis die Rechnung bezahlt ist, oder bis die Einspruchsfrist des Kunden beim Lastschriftverfahren abgelaufen ist. Nachfolgend wird das Abrechnungsverfahren in weiteren Einzelheiten dargestellt. Sobald eine SSL-Verbindung aufgebaut wird, läuft zunächst das SSL-Handshake-Protokoll ab. Eine SSL-Verbindung wird u.a. dann aufgebaut, wenn der Client eine Webseite über das https-Protokoll anfordert, z.B. bei einem Link der Art https://www.kostenpflichtig.com.

Das standardisierte SSL/TLS-Handshake-Protokoll umfaßt dabei die folgenden Schritte:

| | ***Client*** | | ***Server*** |
|---|---|---|---|
| *1.* | *ClientHello*-Nachricht mit den vorgeschlagenen SSL-Optionen | → | |
| *2.* | | ← | *ServerHello*-Nachricht mit den ausgewählten SSL-Optionen |
| 3. | | ← | *Certificate*-Nachricht mit Serverzertifikat |
| 4. | | ← | Mit der *CertificateRequest*-Nachricht wird der Client aufgefordert sich zu authentifizieren |
| 5. | | ← | *ServerHelloDone-* Nachricht |
| *6.* | *Certificate*-Nachricht mit Clientzertifikat | → | |
| *7.* | *ClientKeyExchange-* Nachricht mit Sitzungsschlüssel (verschlüsselt mit Public-Key des Servers) | → | |
| *8.* | *CertificateVerify-* Nachricht mit Signatur aller vorangegangenen Handshake-Nachrichten | → | |
| *9.* | *ChangeCipherSpec* | → | |
| *10* | *Finished* | → | |
| *11* | | ← | *ChangeCipherSpec* |
| *12* | | ← | *Finished* |

Um in dieses Standardprotokoll ein Abrechnungsverfahren zu integrieren, können die Nachrichten *ServerHello, Certificate, CertificateRequest, Certificate* (des Clients) und *CertificateVerify* benutzt werden.

In der *ServerHello*-Nachricht kann der Preis der Seite in die Werte Random (ein 32 Byte langer zufälliger Wert, in den auch die Uhrzeit mit einfließt) und/oder SessionID eingebettet werden. Bettet man den Preis anstelle eines Teils der Uhrzeit ein, so sind auch keine nachteiligen Effekte hinsichtlich der Sicherheit des SSL/TLS-Protokolls zu erwarten, da die Uhrzeit auch ein öffentlich bekannter Wert ist.

Die *Certificate*-Nachricht des Servers kann auch dazu benutzt werden, den Preis zu übertragen, wenn der Server sich für jeden möglichen Preis ein separates Zertifikat zulegt (z.B. Zertifikate für 1, 2, 5, 10, 50 Pfennige und für 1, 2, 5, 10 DM). Ggf. könnte man mit Hilfe leicht fehlerhafter Zertifikate an dieser Stelle ein Pop-Up im Client provozieren, in dem dieser Preis dann angezeigt würde. Da sich das Verhalten der Clients in diesem Punkt allerdings sehr unterscheiden kann, ist diese Methode wohl nur schwer durchgängig zu implementieren (Ggf. wäre hier ein IETF RFC zum Verhalten von Clients bei fehlerhaften Zertifikaten nötig.)

Mit Hilfe der *CertificateRequest*-Nachricht teilt der Server dem Client mit
a) daß die aufzubauende SSL-Sitzung kostenpflichtig ist, und kann ihm mitteilen,
b) was die aufzubauende SSL-Sitzung kostet.

Im Zertifikat des Clients sind die Abrechnungsinformationen (Kundennummer, Bankverbindung u.ä.) enthalten. Da diese Informationen werden mit der *Certificate*-Nachricht übermittelt. Mit der *CertificateVerify*-Nachricht bestätigt der Client den Kauf, er unterschreibt darin sozusagen den Abrechnungsbeleg.

Dies wird technisch wie folgt realisiert (man beachte, dass das "neue" SSL-Protokoll weiterhin kompatibel zu einem Standard-SSL sein soll, d.h. ein Client, der über keine Abrechnungsfunktionalität verfügt, soll sich entsprechend verhalten).

Die *CertificateRequest*-Nachricht ist dabei wie folgt aufgebaut:

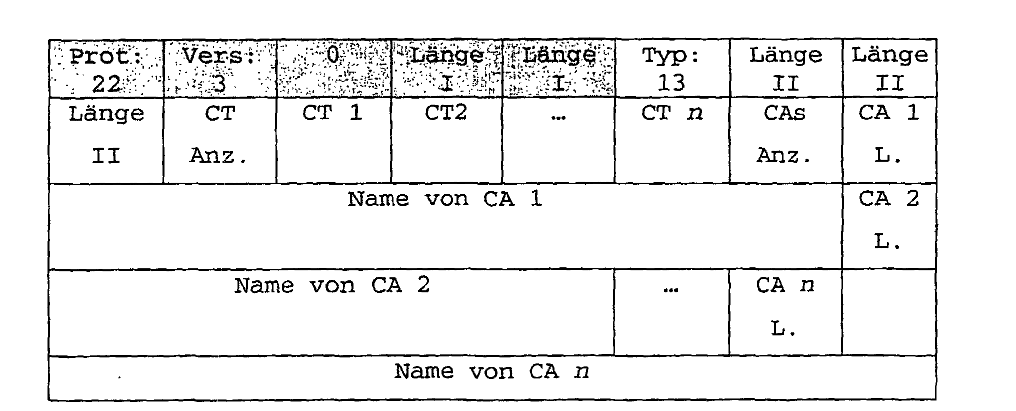

Die ersten fünf Bytes beschreiben das Protokoll (SSL-Handshake), die SSL-Version und die Länge der gesamten Nachricht. Die darauffolgenden vier Bytes beschreiben den Typ der Handshake-Nachricht (*CertificateRequest*) und ihre Länge. Es folgt eine Liste mit Zertifikatstypen (Certificate Types): Zunächst die Anzahl der (erlaubten) Zertifikatstypen, dann die Zertifikatstypen selbst (eine Zahl zwischen 1 und 255). Darauf folgt schließlich eine Liste der erlaubten Zertifizierungsinstanzen (Certificate Authorities, CAs) i.d.F. Anzahl der CAs, Länge des Namens von CA 1, Name von CA 1 usf.

Eine Zertifizierungsinstanz wird mit ihrem eindeutigen Namen (DN = Distinguished Name) beschrieben. Einen Distinguished Name kann man mit Hilfe der in spezifizierten Beschreibungssprache ASN.1 wie folgt beschreiben:
Name ::= SEQUENCE OF RelativeDistinguishedName
RelativeDistinguishedName ::= SET OF AttributeValueAssertion
AttributeValueAssertion ::= SEQUENCE { attributeType OBJECT IDENTIFIER attributeValue ANY }
Üblicherweise verwendete Attribut-Typen sind die folgenden:
countryName ::= SEQUENCE{ {2 5 4 6}, StringType(SIZE(2) )}
organization := SEQUENCE{ {2 5 4 10},StringType(SIZE(1...64))}
organizationalUnitName ::= SEQUENCE{ {2 5 4 11}, StringType( SIZE (1...64) ) }
commonName ::= SEQUENCE{ {2 5 4 3}, StringType(SIZE(1... 64))}
localityName ::= SEQUENCE{ {2 5 4 7}, StringType(SIZE(1...64))}
stateOrProvinceName ::= SEQUENCE{{2 5 4 8}, String Type(SIZE (1...64))}

Durch diese Attribute wird also eine Zertifizierungsinstanz eindeutig beschrieben, deren Zertifikate vom Server zur Authentifikation des Clients anerkannt werden. Das Entscheidende für die Erweiterung des SSL-Protokolls zu einem Internet-Abrechnungsverfahren ist, daß ein Distinguished Name auch dazu benutzt werden kann, einen Preis für eine SSL-Sitzung zu beschreiben. Dazu wird das Attribut commonName auf "PRICE" gesetzt und zusätzlich werden die Attribute-Typen
currency ::= SEQUENCE{ {2 x y z}, StringType(SIZE(3) )}
amount ::= SEQUENCE{ {2 x y z}, INTEGER }
cent ::= SEQUENCE{ {2 x y z}, INTEGER { 0,...,99 } }
verwendet. Eine entsprechende *CertificateRequest*-Nachricht, die die Preisinformation enthält, ist also eine Liste mit den Distinguished Names der CAs, die Abrechnungszertifikate herausgeben und enthält zusätzlich einen Distinguished Name der Form
commonName: "PRICE", currency: "EUR", amount:19, cent:95

Dieser Distinguished Name bezieht sich natürlich nicht auf eine real existierend Zertifizierungsinstanz, sondern ist in der Liste der erlaubten CAs nur dazu da, den Preis für die SSL-Sitzung zu dokumentieren.

Ein Client, der ein entsprechendes Abrechnungszertifikat einer der erlaubten Zertifizierungsinstanzen besitzt, sendet dieses in der *Certificate*-Nachricht zum Server. Das Zertifikat enthält im Extensions-Feld einen oder mehrere Extension-Werte mit Abrechnungsinformationen wie
- Kontonummer, Bankleitzahl
- alternativ: Kundennummer
- alternativ: Kreditkartennummer
- Maximalbetrag, bis zu dem das Zertifikat gültig ist.

Mit der *Certificateverify*-Nachricht signiert der Client schließlich den virtuellen Kassenbon: diese Nachricht enthält einen vom Client signierten Hashwert, der wie folgt aufgebaut ist:
MD5 (*Master-Secret,* 48mal 5C₁₆, MD5 (*HandshakeMessages*, *MasterSecret*, 48mal 36₁₆)

Insbesondere wird dieser Hashwert (MD5) mit einem Hashwert (innerer MD5) berechnet, der u.a. über alle bis zu diesem Zeitpunkt ausgetauschten Handshake-Nachrichten gebildet wird. Daraus folgt, das die entsprechende elektronische Signatur dieses Hashwerts mit einer Signatur der vorangegangenen Handshake-Nachrichten gleichzusetzen ist, vorausgesetzt, das Master-Secret ist bei der Überprüfung dieser Signatur bekannt. Da in den vorangegangenen Handshake-Nachrichten u.a. die *ServerHello-, Certificate- und CertificateRequest*-Nachricht des Servers mit dem Preis enthalten war, wird mit der Signatur in der *CertificateVerify*-Nachricht dokumentiert, dass der Client Kenntniss vom verlangten Preis erlangt hat.

Der Server protokolliert für jede aufgebaute SSL-Sitzung die ausgetauschten Handshake-Nachrichten, das *MasterSecret* und den Hashwert mit Signatur der *CertificateVerify*-Nachricht des Clients. Mit dieser Information kann der Betreiber des Servers später beweisen, dass ein entsprechender SSL-Verbindungsaufbau stattgefunden hat, bei dem der entsprechende Preis verlangt wurde.

Ein Standard-SSL-Client, der ein von einer Abrechnungs-CA herausgegebenes Zertifikat besitzt, würde dem Server das entsprechende Zertifikat zur Verfügung stellen, da er der Liste der erlaubten CAs entnehmen kann, welches Zertifikat für diesen Verbindungsaufbau benötigt wird. Den Distinguished Name mit dem commonName "PRICE" würde er ignorieren, trotzdem würde er diesen DN in der *CertificateVerify*-Nachricht mithashen und damit mitsignieren.

Ein entsprechend modifizierter SSL-Client würde den DN mit dem commonName "PRICE" der *CertificateRequest*-Nachricht auswerten und vor dem Fortfahren des Handshakes dem Benutzer anzeigen.

Es versteht sich von selbst, daß die vorbeschriebenen Änderungen des bekannten SSL-Protokolls nur beispielhaft sind und selbstverständlich andere Änderungen je nach den gegebenen Umständen vornehmbar sind.

## Patentansprüche

1. Abrechnungsverfahren für das Anfordern von Inhalten oder Daten in einem Netzwerk, wobei ein Client bzw. ein den Client benutzender Kunde ein Zertifikat für das Abrechnungsverfahren hat, welches verifizierte Daten enthält, die den Kunden ausweisen und das Erstellen einer Rechnung bzw. die Abrechnung ermöglichen, wobei ein Handshake Protokoll für die Sicherheit der Verbindung
zwischen dem Client und einem Server verwendet wird, wobei ein Client-Zertifikat verwendet wird, **dadurch gekennzeichnet, dass** in dem Client-Zertifikat eine Extension gesetzt ist, die anzeigt, dass das Zertifikat für Abrechnungszwecke geeignet ist, und das während des Handshake Protokolls der Preis für den angeforderten Inhalt oder die Daten vom Server an den Client übertragen werden, und eine
Bestätigungsnachricht, die ebenfalls im Protokoll eingebunden ist und die eine digitale Signatur enthält, vom Client zum Server übertragen wird, wobei die Bestätigungsnachricht den zuvor übermittelten Preis bestätigt.

2. Abrechnungsverfahren nach Anspruch 1, **dadurch gekennzeichnet, daß** die Bestätigungsnachrichten und/oder Logfiles vom Server protokolliert und die darin enthaltenen Daten für die Abrechnung verwendet werden.

3. Abrechnungsverfahren nach einem der vorhergehenden Ansprüche, **dadurch gekennzeichnet, daß** nach dem Herunterladen des bezahlten Inhalts bzw. der bezahlten Daten die Client-Server Verbindung abgebaut wird.

4. Abrechnungsverfahren nach Anspruch 3, **dadurch gekennzeichnet, daß** der Abbau automatisch vom Server durchgeführt wird.

5. Abrechnungsverfahren nach einem der vorhergehenden Ansprüche, **dadurch gekennzeichnet, daß** vor Anwahl einer kostenpflichtigen Internetseite eine möglicherweise bestehende Client-Server Verbindung durch den Server oder eine zwischengeschaltete Internetseite abgebaut wird, und anschließend eine erneute Client-Authentifikation zum Herunterladen der kostenpflichtigen Internetseite erfolgt.

6. Abrechnungsverfahren nach einem der vorhergehenden Ansprüche, **dadurch gekennzeichnet, daß** vor der Signierung der Bestätigungsnachricht eine Abfrage, insbesondere mittels einer Dialogbox, beim Client erfolgt, in der mittels manueller Bestätigung die angezeigten Kosten für die angewählte kostenpflichtige Internetseite bzw. der angewählten Daten bestätigt werden können, wobei bei Bestätigung der Kosten der kostenpflichtige Inhalt bzw. die Daten vom Server zum Client übertragen werden oder aber der Anfragevorgang abgebrochen wird.

7. Abrechnungsverfahren nach Anspruch 6, **dadurch gekennzeichnet, daß** die Abfrage über eine Fehlermeldung des Clients (z.B. Certificate Name Check) realisiert wird.

8. Abrechnungsverfahren nach Anspruch 1 bis 6, **dadurch gekennzeichnet , daß** das handshake Protokoll ein SSL Protokoll bzw. eine Variante davon mittels eines Java-Applets oder einer Active-X-Anwendung realisiert ist, die insbesondere ihrerseits signiert sind.

9. Abrechnungsverfahren nach einem der vorhergehenden Ansprüche, **dadurch gekennzeichnet, daß** Kostenangaben mittels signierter XML-(eXtended Markup Language) Seiten dem Client übermittelt werden.

10. Abrechnungsverfahren nach Anspruch 9, **dadurch gekennzeichnet, daß** die Seiten mit der Preisangabe und/oder mit einer Zeitangabe signiert sind.

11. Abrechnungsverfahren nach Anspruch 10, **dadurch gekennzeichnet, daß** in die Signatur zusätzlich ein Hashwert des Inhalts der kostenpflichtigen Seite eingeht.

## Claims

1. Billing method for the requesting of content or data in a network, wherein a client or a customer using the client has a certificate for the billing method, said certificate containing verified data identifying the customer and enabling the creation of an invoice or billing, a handshake protocol being used for the security of the connection between the client and a server, a client certificate being used, **characterized in that** an extension is set in the client certificate, said extension indicating that the certificate is suitable for billing purposes, and **in that**, during the handshake protocol, the price of the requested content or data is transmitted from the server to the client, wherein a confirmation message, likewise included in the protocol and containing a digital signature, is transmitted from the client to the server, the confirmation message confirming the previously communicated price.

2. Billing method according to claim 1, **characterized in that** the confirmation messages and/or log files are recorded by the server and the therein contained data are used for billing.

3. Billing method according to any one of the preceding claims, **characterized in that**, after the paid content or data has been downloaded, the client-server connection is cleared down.

4. Billing method according to claim 3, **characterized in that** cleardown is performed automatically by the server.

5. Billing method according to any one of the preceding claims, **characterized in that**, prior to selection of a payable Internet page, a possibly existing client-server connection is cleared down by the server or by an intermediate Internet page and then there is renewed client authentication for the downloading of the payable Internet page.

6. Billing method according to any one of the preceding claims, **characterized in that**, prior to the signing of the confirmation message, the client is queried, particularly by means of a dialog box, in which, by means of manual confirmation, the indicated cost of the selected payable Internet page or selected data can be confirmed, wherein, if the cost is confirmed, the payable content or data is transmitted from the server to the client or, alternatively, the request transaction is aborted.

7. Billing method according to claim 6, **characterized in that** the query is realized by means of an error message of the client (e.g. certificate name check).

8. Billing method according to claims 1 to 6, **characterized in that** the handshake protocol, an SSL protocol or a variant thereof is realized by means of a Java applet or an Active X application which are signed in particular at their end.

9. Billing method according to any one of the preceding claims, **characterized in that** cost details are communicated to the client by means of signed XML (extended Markup Language) pages.

10. Billing method according to claim 9, **characterized in that** the pages are signed with the price details and/or with time details.

11. Billing method according to claim 10, **characterized in that** the signature additionally includes a hash value of the content of the payable page.

## Revendications

1. Procédé de facturation pour la demande de contenus ou de données dans un réseau, dans lequel un client (poste client) ou un client utilisant un poste client dispose d'un certificat pour le procédé de facturation, lequel certificat contient des données vérifiées prouvant l'identité de l'utilisateur et permettant l'établissement d'une facture ou le décompte, dans lequel on utilise un protocole « poignée de mains » (*handshake protocol*) pour la sécurité de la liaison entre le client et un serveur, un certificat de client étant utilisé,
**caractérisé en ce que**,
dans le certificat de client, une extension est prévue, qui indique que ce certificat est approprié à des fins de facturation, et **en ce que**, au cours du protocole « poignée de mains », le prix du contenu ou les données demandées sont transmis par le serveur au client, et un message de validation, qui est également inséré dans le protocole et contient une signature numérique, est transmis du client au serveur, le message de confirmation validant le prix transmis auparavant.

2. Procédé de facturation selon la revendication 1,
**caractérisé en ce que** les messages de validation et/ou les *logfiles* (fichiers de compte-rendu) sont consignés par le serveur et les données qui y sont contenues sont utilisées pour la facturation.

3. Procédé de facturation selon l'une des revendications précédentes, **caractérisé en ce que**, après le téléchargement du contenu payé ou des données payées, la liaison client-serveur est rompue.

4. Procédé de facturation selon la revendication 3,
**caractérisé en ce que** la rupture de la liaison est effectuée automatiquement par le serveur.

5. Procédé de facturation selon l'une des revendications précédentes, **caractérisé en ce que**, avant la sélection d'une page Internet payante, une liaison client-serveur éventuellement existante est rompue par le serveur ou une page Internet intercalée, et qu'une nouvelle authentification de client est ensuite effectuée pour télécharger la page Internet payante.

6. Procédé de facturation selon l'une des revendications précédentes, caractérisé en ce, avant la signature du message de validation, une demande s'effectue auprès du client, notamment par l'intermédiaire d'une boîte de dialogue, dans laquelle, au moyen d'une validation manuelle, les coûts indiqués pour la page Internet payante sélectionnée ou les données sélectionnées peuvent être validés, et en cas de validation des coûts, le contenu payant ou les données sont transmis par le serveur au client, le processus d'interrogation étant dans le cas contraire interrompu.

7. Procédé de facturation selon la revendication 6,
**caractérisé en ce que** l'interrogation est réalisée par le biais d'un rapport d'erreur du client (par ex. Certificate Name Check).

8. Procédé de facturation selon les revendications 1 à 6,
**caractérisé en ce que** le protocole « poignée de mains », un protocole SSL ou une variante de ces derniers est réalisé au moyen d'un applet Java ou d'une application Active-X, qui sont à leur tour notamment signés.

9. Procédé de facturation selon l'une des revendications précédentes, **caractérisé en ce que** les indications de coût sont transmises au client au moyen de pages XML (*Extended Markup Language*) signées.

10. Procédé de facturation selon la revendication 9,
**caractérisé en ce que** les pages sont signées avec l'indication de prix et/ou avec une indication de temps.

11. Procédé de facturation selon la revendication 10,
**caractérisé en ce que** la signature comprend en plus une valeur de hachage du contenu de la page payante.
